# EUROPEAN PATENT SPECIFICATION

(11) **EP 3 653 276 B1**
(45) Date of publication and mention of the grant of the patent: **10.03.2021**
(21) Application number: 18205928.7
(22) Date of filing: 13.11.2018
(51) Int. Cl.: A63B 71/06, A63B 22/00, A63B 24/00, A63F 13/40

(54) **FITNESS EQUIPMENT SYSTEM DETECTABLE AS STANDARD COMPUTER SYSTEM INPUT DEVICE**
ALS STANDARD-COMPUTERSYSTEMEINGABEVORRICHTUNG DETEKTIERBARES FITNESSAUSRÜSTUNGSSYSTEM
SYSTÈME D'ÉQUIPEMENT DE FITNESS POUVANT ÊTRE DÉTECTÉ COMME DISPOSITIF D'ENTRÉE DE SYSTÈME INFORMATIQUE STANDARD

(43) Date of publication of application: 20.05.2020
(73) Proprietor: Nicolescu, Liviu-Costin, Mun Pitesti, Judet Arges (RO); Vintila, Mihai, Bucuresti, District 3 (RO)
(72) Inventor: Nicolescu, Liviu-Costin, Mun Pitesti, Judet Arges (RO); Vintila, Mihai, Bucuresti, District 3 (RO)
(74) Representative: Grünecker Patent- und Rechtsanwälte PartG mbB

(56) References cited:
- GB-A- 2 414 195
- US-A1- 2010 081 548
- US-A1- 2010 279 823
- US-A1- 2013 210 576

## Description

The present invention relates to a fitness equipment system.

A fitness equipment system according to the preamble of independent claim 1 comprises a training mechanism to be operated by a user of the fitness equipment system for training purposes, at least one sensor assigned to the training mechanism for measuring a variable related to a physical work performed by the user when operating the training mechanism, the sensor generating a sensor signal, and an input-output unit for generating an output signal based on the sensor signal.

A fitness equipment system according to the preamble of independent claim 1 is known, for example, from US 2010/0279823 A1. This document discloses a fitness hardware, for example an exercise bicycle, a stair machine, treadmill, elliptical trainer or rotary climbing wall, that can be connected to a PC or a game console such that the user can interact with a video game. The drawback of such a device as described in US 2010/0279823 A1 is that it requires a special software and, particularly, a special device driver installed on the PC or game console.

Further related prior art is known from US 2010/081548 A1, GB 2414195 A and US 2013/210576 A1.

The object of the present invention is to provide a fitness equipment system that can easily be connected to a computer system and that allows the user to interact with software installed on the computer system.

The object is achieved by the features of independent claim 1. Accordingly, in a generic fitness equipment system, the object is achieved according to the invention if the input-output unit is configured to generate the output signal as an output signal of a standard computer system input device selected from the group consisting of a standard computer system keyboard, a standard computer system mouse, a standard computer system touchpad and a standard computer system trackpad such that the fitness equipment system is connectable to the computer system without the need to install a special device driver, which is not already installed on the computer system like for example a standard computer system keyboard device driver, and is detected by the computer system as a standard computer system input device. Further, the fitness equipment system comprises a data processing and mapping unit for converting the sensor signal into one or several of a multitude of input possibilities of the standard computer system input device, the data processing and mapping unit being part of the input-output unit or provided as a separate unit receiving the sensor signal and communicating with the input-output unit.The invention has the advantage that the fitness equipment system can easily be connected to a computer system, preferably via a standard port, without the need to install a special device driver. The fitness equipment system according to the invention is detected by the computer system as a standard input device. It allows the user of the fitness equipment system to interact with or control basically any software installed on the computer system. If the user would like to use a special fitness evaluation software for monitoring and evaluating the fitness training parameters such as speed, power, calories or the like, the software only needs to be adapted such that it reads, for example, characters or strings of characters transmitted by the fitness equipment system and translates them into fitness training parameters that may be further processed by the software.

The computer system is preferably a PC and the standard computer system input device is preferably a standard PC input device.

Further preferred embodiments of the invention are subject of the subclaims.

In a particularly preferred embodiment of the present invention, the input-output unit is configured to generate the output signal as an output signal of a standard computer system keyboard. According to this embodiment, the fitness equipment system is detected by the computer system as a standard computer system keyboard. No special device driver is required, the standard computer system keyboard device driver already installed on the computer system is sufficient.

Alternatively or in addition, the input-output unit may be configured to generate the output signal as an output signal of a standard computer system mouse and/or standard computer system touchpad and/or standard computer system trackpad. For example, the fitness equipment system according to the invention may be detected by the computer system as a combination of a standard computer system keyboard and a standard computer system mouse.

In another particularly preferred embodiment of the present invention, the data processing and mapping unit is configured to convert the sensor signal into a certain character or into a certain string of characters of a standard computer system keyboard layout depending on the type of sensor and/or the strength and/or height of the sensor signal and/or the length of the sensor signal.

According to another particularly preferred embodiment of the present invention, the fitness equipment system further comprises at least one input element providing a function of an integrated computer system input device of the fitness equipment system, wherein the input-output unit is configured to generate the output signal based on the sensor signal and/or based on an activation of the at least one input element. Preferably, the fitness equipment system comprises several input elements providing functions of the integrated computer system input device, the integrated computer system input device being an integrated computer system keyboard and/or mouse and/or touchpad and/or trackpad of the fitness equipment system. It is particularly preferred if the input elements provide all functions of a standard computer system keyboard with QWERTY of QWERTZ layout. The input elements are preferably keys of a standard keyboard layout. This embodiment has the advantage that the user may use the fitness equipment system as a fully operable computer system input device. No other or additional computer system input device needs to be connected to the computer system in order to interact with or control any software installed on the computer system. The fitness equipment system therefore fully substitutes a computer system keyboard and/or a mouse and/or touchpad and/or trackpad. The integrated computer system input device of the fitness equipment system is preferably an integrated standard PC input device of the fitness equipment system.

In another preferred embodiment of the invention, the fitness equipment system comprises two or more sensors assigned to the training mechanism. This embodiment allows that several or a multitude of variables related to a physical work performed by the user when operating the training mechanism can be measured and transmitted to the computer system.

According to another particularly preferred embodiment of the invention, the fitness equipment system is operable in a standard mode and in a mapping mode, wherein in the standard mode, activation of one of the input elements is followed by the input-output unit generating an output signal based on activation of the respective input element, and wherein in the mapping mode, the user can assign a certain input possibility of the standard computer system input device to each of the sensors and/or to the sensor signals by activating one or several of the input elements. The fitness equipment system can thus be configured by the user, in particular in order to work with different fitness evaluation software.

According to another embodiment of the present invention, the fitness equipment system comprises a USB-interface for connecting the input-output unit to a computer system. This allows the fitness equipment system to be connected to the computer systemvia a standard interface usually used to connect a standard computer systemkeyboard to the computer system. Alternatively or in addition, the fitness equipment system may comprise a wireless interface for wirelessly connecting the input-output unit to the computer system, in particular via Bluetooth, Wi-Fi or ZigBee.

In another preferred embodiment of the present invention, the fitness equipment system further comprises a processor and a display for presenting information based on the sensor signal of the at least one sensor to the user. With this embodiment, the fitness equipment system can be used as a stand-alone system and does not need to be connected to a computer systemin order to present information based on the measured variables to the user.

The fitness equipment system according to the invention may be or may comprise basically any type of fitness device. Preferably, the fitness equipment system is or comprises a fitness device selected from the group consisting of a treadmill, a spinner, an elliptical bike, a rower and a stepper.

One embodiment of the present invention will be illustrated more in detail below with reference to drawings.

In the drawings:
- Figure 1:: shows a perspective view of a fitness equipment system according to the invention,
- Figure 2:: shows a perspective detailed view of the fitness equipment system in Figure 1,
- Figure 3:: shows a block diagram illustrating the operating principle of the fitness equipment system of Figures 1 and 2.

In the following illustrations, equal parts are designated by equal reference numerals. If a figure contains reference numerals which are not explicitly discussed in the pertaining description of the figures, reference is made to previous or subsequent descriptions of the figures.

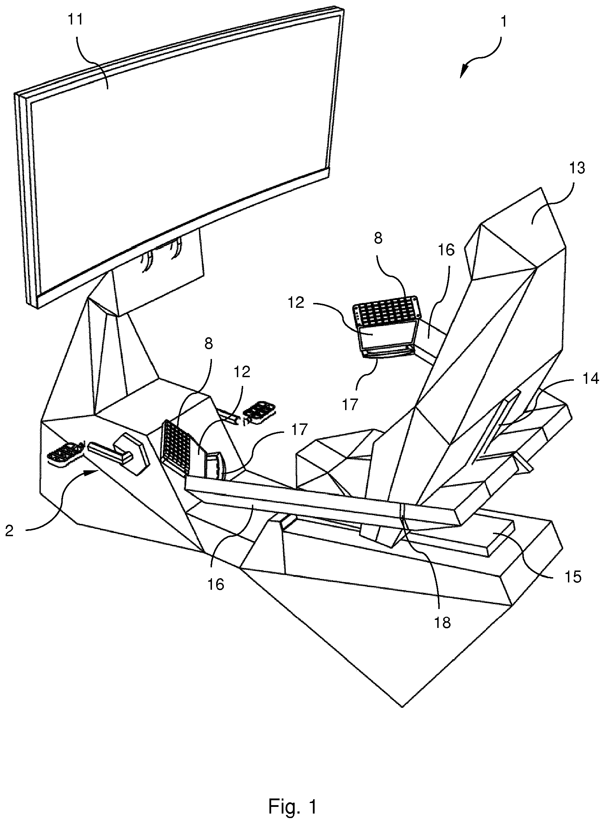

Figure 1 shows an embodiment of the fitness equipment system 1 according to the invention. The fitness equipment system 1 is a spinning device that comprises a pedal system as training mechanism 2. The user of the device can sit on a seat 13 that is adjustable in height via vertical slider 14. The horizontal position of the seat can be adjusted via the horizontal slider 15. The device further comprises two multi-use arms 16, each having a handle 17. The user may use both, the pedal system 2 and the multi-use arms 16 for training purposes. The multi-use arms can be moved in at least three directions: forward-backward, left-right, and up-down. A locking system allows the user to choose whether the multi-use arms can be moved independently, together or not at all. Thus, the user can choose to operate the multi-use arms if they are set to work independently or together, or to block them in a fixed position such that no mechanical work is applied to the multi-use arms. The length of the multi-use arms can be adjusted via a slider 18.

The pedal system 2 and the multi-use arms 16 both have an adjusting mechanism that allows the user to adjust the level of mechanical work needed to operate the pedal system and the multi-use arms.

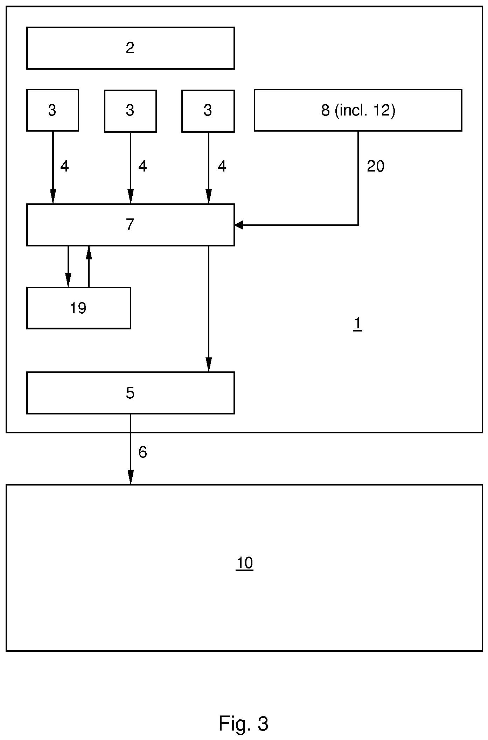

Sensors associated with the pedal system allow determining whether the user uses the pedal system 2, in which direction the pedals are moved, and what the rotation speed is. Sensors fitted in the multi-use arms allow determining the position vector of the multi-use arm with respect to an origin. The sensors 3 of pedal system 2 and multi-use arms are not shown in the drawing and are only indicated in the block diagram in Figure 3.

As shown in figure 1, the fitness equipment system 1 also comprises a display 11 for presenting information, such as speed, power, calories or the like to the user. The display 11 is optional. The fitness equipment system 1 may alternatively be used with an external display of a computer system to which the fitness equipment system is connected.

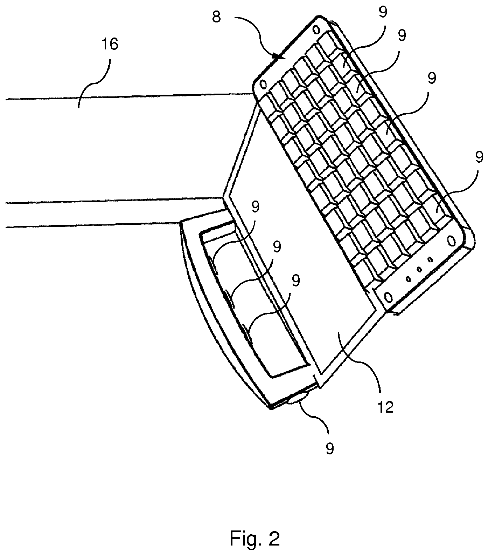

Both multi-use arms are equipped with an integrated PC keyboard 8 with a touchpad 12. As can be seen in figure 2, the keyboard 8 comprises several keys 9 that are arranged in a conventional PC keyboard layout. Additional keys 9 are integrated in the handle 17. The integrated PC keyboard 8 provides the full functionality of a standard QWERTY or QWERTZ keyboard layout.

Figure 3 shows a block diagram illustrating the operating principle of the fitness equipment system 1. The sensor signals 4 of sensors 3 and the integrated PC input device signal 20 from the integrated keyboard 8 are processed by a data processing and mapping unit 7. The data processing and mapping unit 7 is connected to an input-output unit 5 that generates an output signal 6 corresponding to the output signal of a standard PC keyboard with touchpad. The fitness equipment system which is connected to a PC 10, for example via a USB interface, is therefore detected by the PC 10 as a standard PC keyboard such that no special hardware device driver is necessary.

The data processing and mapping unit 7 is configured to convert the sensor signal 4 into a certain character or into a certain string of characters of a standard PC keyboard layout depending on the type of sensor 3 and/or the strength and/or height of the sensor signal 4 and/or the length of the sensor signal, wherein the character or string of characters assigned to the sensor or sensor signal can be configured by the user in a mapping mode of the fitness equipment system. The mapping settings are stored in the memory 19.

The fitness equipment system 1 can be used as a replacement for a conventional PC keyboard and mouse or trackpad device allowing the user to fully control any software application running on a computer system equipped with a standard input/output port.

### List of reference numerals

- 1: Fitness equipment system
- 2: Training mechanism
- 3: Sensor
- 4: Sensor signal
- 5: Input-output unit
- 6: Output signal
- 7: Data processing and mapping unit
- 8: Integrated keyboard (integrated PC input device)
- 9: Key (input element)
- 10: PC
- 11: Display
- 12: Touchpad
- 13: Seat
- 14: Vertical slider
- 15: Horizontal slider
- 16: Multi-use arm
- 17: Handle
- 18: Multi-use arm slider
- 19: Memory
- 20: Integrated PC input device signal

## Claims

1. Fitness equipment system (1) connectable to a computer system, the fitness equipment system (1) comprising
a training mechanism (2) to be operated by a user of the fitness equipment system for training purposes,
at least one sensor (3) assigned to the training mechanism for measuring a variable related to a physical work performed by the user when operating the training mechanism, the sensor (3) generating a sensor signal (4),
and an input-output unit (5) for generating an output signal (6) based on the sensor signal (4), **characterized in that** the input-output unit (5) is configured to generate the output signal (6) as an output signal of a standard computer system input device selected from the group consisting of a standard computer system keyboard, a standard computer system mouse, a standard computer system touchpad and a standard computer system trackpad such that the fitness equipment system (1) is connectable to the computer system without the need to install a special device driver, which is not already installed on the computer system like for example a standard computer system keyboard device driver, and is detected by the computer system as a standard computer system input device, wherein the fitness equipment system (1) comprises a data processing and mapping unit (7) for converting the sensor signal (4) into one or several of a multitude of input possibilities of the standard computer system input device, the data processing and mapping unit (7) being part of the input-output unit (5) or provided as a separate unit receiving the sensor signal (4) and communicating with the input-output unit (5).

2. Fitness equipment system (1) according to claim 1, **characterized in that** the input-output unit (5) is configured to generate the output signal (6) as an output signal of a standard computer system keyboard.

3. Fitness equipment system (1) according to claim 1 or 2, **characterized in that** the input-output unit (5) is configured to generate the output signal (6) as an output signal of a standard computer system mouse and/or standard computer system touchpad and/or standard computer system trackpad.

4. Fitness equipment system (1) according to claim 1, **characterized in that** the data processing and mapping unit (7) is configured to convert the sensor signal (4) into a certain character or into a certain string of characters of a standard computer system keyboard layout depending on the type of sensor (3) and/or the strength and/or height of the sensor signal (4) and/or the length of the sensor signal (4).

5. Fitness equipment system (1) according to any one of claims 1 to 4, **characterized in that** the fitness equipment system (1) further comprises at least one input element (9) providing a function of an integrated computer system input device (8) of the fitness equipment system (1), wherein the input-output unit (5) is configured to generate the output signal (6) based on the sensor signal (4) and/or based on an activation of the at least one input element (9).

6. Fitness equipment system (1) according to claim 5, **characterized in that** the fitness equipment system (1) comprises several input elements (9) providing functions of the integrated computer system input device (8), the integrated computer system input device (8) being an integrated computer system keyboard and/or mouse and/or touchpad and/or trackpad of the fitness equipment system (1).

7. Fitness equipment system (1) according to claim 6, **characterized in that** the input elements (9) provide all functions of a standard computer system keyboard with QWERTY of QWERTZ layout.

8. Fitness equipment system (1) according to any one of claims 1 to 7, **characterized in that** the fitness equipment system (1) comprises two or more sensors (3) assigned to the training mechanism (2).

9. Fitness equipment system (1) according to claim 8 in combination with claim 6 or 7, **characterized in that** the fitness equipment system (1) is operable in a standard mode and in a mapping mode, wherein in the standard mode, activation of one of the input elements (9) is followed by the input-output unit (5) generating an output signal (6) based on activation of the respective input element (9), and wherein in the mapping mode, the user can assign a certain input possibility of the standard computer system input device to each of the sensors (3) and/or to the sensor signals (4) by activating one or several of the input elements (9).

10. Fitness equipment system (1) according to any one of claims 1 to 9, **characterized in that** the fitness equipment (1) system comprises a USB-interface for connecting the input-output unit (5) to a computer system, preferably to a PC (10).

11. Fitness equipment system (1) according to any one of claims 1 to 10, **characterized in that** the fitness equipment system (1) comprises a wireless interface for wirelessly connecting the input-output (5) unit to the computer system, in particular via Bluetooth, Wi-Fi or ZigBee.

12. Fitness equipment system (1) according to any one of claims 1 to 11, **characterized in that** the fitness equipment system (1) further comprises a processor and a display (11) for presenting information based on the sensor signal (4) of the at least one sensor (3) to the user.

13. Fitness equipment system (1) according to any one of claims 1 to 12, **characterized in that** the fitness equipment system (1) is or comprises a fitness device selected from the group consisting of a treadmill, a spinner, an elliptical bike, a rower and a stepper.

## Patentansprüche

1. Fitness-Equipment-System (1), das an ein Computersystem angeschlossen werden kann, wobei das Fitness-Equipment-System (1) umfasst:
einen Trainingsmechanismus (2), der von einem Benutzer des Fitness-Equipment-Systems zu Trainingszwecken betätigt wird,
wenigstens einen dem Trainingsmechanismus zugeordneten Sensor (3) zum Messen einer Variablen, die mit einer von dem Benutzer beim Betätigen des Trainingsmechanismus verrichteten körperlichen Arbeit zusammenhängt, wobei der Sensor (3) ein Sensor-Signal (4) erzeugt,
und eine Eingabe-Ausgabe-Einheit (5) zum Erzeugen eines Ausgangs-Signals (6) basierend auf dem Sensor-Signal (4),
**dadurch gekennzeichnet, dass** die Eingabe-Ausgabe-Einheit (5) so ausgeführt ist, dass sie das Ausgangs-Signal (6) als ein Ausgangs-Signal eines Standard-Computersystem-Eingabegerätes erzeugt, das aus der Gruppe ausgewählt wird, die aus einer Standard-Computersystem-Tastatur, einer Standard-Computersystem-Maus, einem Standard-Computersystem-Touchpad und einem Standard-Computersystem-Trackpad besteht, so dass das Fitness-Equipment-System (1) an das Computersystem angeschlossen werden kann, ohne dass ein spezieller Gerätetreiber, wie beispielsweise ein Standard-Computersystem-Tastatur-Gerätetreiber, installiert werden muss, der nicht bereits auf dem Computersystem installiert ist und von dem Computersystem als ein Standard-Computersystem-Eingabegerät erkannt wird, wobei das Fitness-Equipment-System (1) eine Datenverarbeitungs-und-Mapping-Einheit (7) zum Umwandeln des Sensor-Signals (4) in eine oder mehrere einer Vielzahl von Eingabemöglichkeiten des Standard-Computersystem-Eingabegerätes umfasst, wobei die Datenverarbeitungs-und-Mapping-Einheit (7) Teil der Eingabe-Ausgabe-Einheit (5) ist oder als eine separate Einheit vorgesehen ist, die das Sensor-Signal (4) empfängt und mit der Eingabe-Ausgabe-Einheit (5) kommuniziert.

2. Fitness-Equipment-System (1) nach Anspruch 1, **dadurch gekennzeichnet, dass** die Eingabe-Ausgabe-Einheit (5) so ausgeführt ist, dass sie das Ausgangs-Signal (6) als ein Ausgangs-Signal einer Standard-Computersystem-Tastatur erzeugt.

3. Fitness-Equipment-System (1) nach Anspruch 1 oder 2, **dadurch gekennzeichnet, dass** die Eingabe-Ausgabe-Einheit (5) so ausgeführt ist, dass sie das Ausgangs-Signal (6) als ein Ausgangs-Signal einer Standard-Computersystem-Maus und/oder eines Standard-Computersystem-Touchpads und/oder eines Standard-Computersystem-Trackpads erzeugt.

4. Fitness-Equipment-System (1) nach Anspruch 1, **dadurch gekennzeichnet, dass** die Datenverarbeitungs-und-Mapping-Einheit (7) so ausgeführt ist, dass sie das Sensor-Signal (4) in Abhängigkeit von dem Typ des Sensors (3) und/oder der Stärke und/oder Höhe des Sensor-Signals (4) und/oder der Länge des Sensor-Signals (4) in ein bestimmtes Zeichen oder in eine bestimmte Zeichenfolge eines Standard-Computersystem-Tastaturlayouts umwandelt.

5. Fitness-Equipment-System (1) nach einem der Ansprüche 1 bis 4, **dadurch gekennzeichnet, dass** das Fitness-Equipment-System (1) des Weiteren wenigstens ein Eingabeelement (9) umfasst, das eine Funktion eines integrierten Computersystem-Eingabegerätes (8) des Fitness-Equipment-Systems (1) erfüllt, wobei die Eingabe-Ausgabe-Einheit (5) so ausgeführt ist, das sie Ausgangs-Signal (6) basierend auf dem Sensor-Signal (4) und/oder basierend auf einer Aktivierung des wenigstens einen Eingabeelementes (9) erzeugt.

6. Fitness-Equipment-System (1) nach Anspruch 5, **dadurch gekennzeichnet, dass** das Fitness-Equipment-System (1) mehrere Eingabeelemente (9) umfasst, die Funktionen des integrierten Computersystem-Eingabegerätes (8) erfüllen, wobei das integrierte Computersystem-Eingabegerät (8) eine integrierte Computersystem-Tastatur und/oder -Maus und/oder ein integriertes Computersystem-Touchpad und/oder -Trackpad des Fitness-Equipment-Systems (1) ist.

7. Fitness-Equipment-System (1) nach Anspruch 6, **dadurch gekennzeichnet, dass** die Eingabeelemente (9) alle Funktionen einer Standard-Computersystem-Tastatur mit QWERTY- oder QWERTZ-Layout erfüllen.

8. Fitness-Equipment-System (1) nach einem der Ansprüche 1 bis 7, **dadurch gekennzeichnet, dass** das Fitness-Equipment-System (1) zwei oder mehr Sensoren (3) umfasst, die dem Trainingsmechanismus (2) zugeordnet sind.

9. Fitness-Equipment-System (1) nach Anspruch 8 in Kombination mit Anspruch 6 oder 7, **dadurch gekennzeichnet, dass** das Fitness-Equipment-System (1) in einem Standard-Modus und in einem Mapping-Modus betrieben werden kann, wobei in dem Standard-Modus auf Aktivierung eines der Eingabeelemente (9) folgend die Eingabe-Ausgabe-Einheit (5) basierend auf Aktivierung des jeweiligen Eingabeelementes (9) ein Ausgangs-Signal (6) erzeugt und in dem Mapping-Modus der Benutzer durch Aktivieren eines oder mehrerer der Eingabeelemente (9) jedem der Sensoren (3) und/oder den SensorSignalen (4) eine bestimmte Eingabemöglichkeit des Standard-Computersystem-Eingabegerätes zuweisen kann.

10. Fitness-Equipment-System (1) nach einem der Ansprüche 1 bis 9, **dadurch gekennzeichnet, dass** das Fitness-Equipment-System (1) eine USB-Schnittstelle zum Anschließen der Eingabe-Ausgabe-Einheit (5) an ein Computersystem, vorzugsweise an einen PC (10), umfasst.

11. Fitness-Equipment-System (1) nach einem der Ansprüche 1 bis 10, **dadurch gekennzeichnet, dass** das Fitness-Equipment-System (1) eine Drahtlos-Schnittstelle zum drahtlosen Verbinden der Eingabe-Ausgabe-Einheit (5) mit dem Computersystem, insbesondere über Bluetooth, Wi-Fi oder ZigBee, umfasst.

12. Fitness-Equipment-System (1) nach einem der Ansprüche 1 bis 11, **dadurch gekennzeichnet, dass** das Fitness-Equipment-System (1) des Weiteren einen Prozessor und ein Display (11) zum Darstellen von Informationen für den Benutzer basierend auf dem Sensor-Signal (4) des wenigstens einen Sensors (3) umfasst.

13. Fitness-Equipment-System (1) nach einem der Ansprüche 1 bis 12, **dadurch gekennzeichnet, dass** das Fitness-Equipment-System (1) ein Fitnessgerät ist oder umfasst, das aus der Gruppe ausgewählt wird, die aus einem Laufband, einem Spinner, einem elliptischen Fahrrad, einer Rudermaschine und einem Stepper besteht.

## Revendications

1. Système d'équipement d'exercice physique (1) pouvant être relié à un système informatique, le système d'équipement d'exercice physique (1) comprenant
un mécanisme d'entraînement (2) à faire fonctionner par un·e utilisateur·trice du système d'équipement d'exercice physique à des fins d'entraînement,
au moins un capteur (3) attribué au mécanisme d'entraînement pour mesurer une variable liée à un travail physique effectué par l'utilisateur·trice lors du fonctionnement du mécanisme d'entraînement, le capteur (3) générant un signal de capteur (4),
et une unité d'entrée-sortie (5) pour générer un signal de sortie (6) sur la base du signal de capteur (4),
**caractérisé en ce que** l'unité d'entrée-sortie (5) est conçue pour générer le signal de sortie (6) comme signal de sortie d'un dispositif d'entrée de système informatique standard sélectionné dans le groupe constitué d'un clavier de système informatique standard, d'une souris de système informatique standard, d'un touchpad de système informatique standard et d'un trackpad de système informatique standard de sorte que le système d'équipement d'exercice physique (1) peut être raccordé au système informatique sans nécessité d'installer un pilote de dispositif spécial, qui n'est pas déjà installé sur le système informatique tel que par exemple un pilote de dispositif clavier de système informatique standard, et qui est détecté par le système informatique comme dispositif d'entrée de système informatique standard, le système d'équipement d'exercice physique (1) comprenant une unité de traitement et de mappage des données (7) pour convertir le signal de capteur (4) en l'une ou plusieurs d'une multitude de possibilités d'entrée du dispositif d'entrée de système informatique standard, l'unité de traitement et de mappage des données (7) faisant partie de l'unité d'entrée-sortie (5) ou fournie comme unité séparée recevant le signal de capteur (4) et communiquant avec l'unité d'entrée-sortie (5).

2. Système d'équipement d'exercice physique (1) selon la revendication 1, **caractérisé en ce que** l'unité d'entrée-sortie (5) est conçue pour générer le signal de sortie (6) sous la forme d'un signal de sortie du clavier de système informatique standard.

3. Système d'équipement d'exercice physique (1) selon la revendication 1 ou 2, **caractérisé en ce que** l'unité d'entrée-sortie (5) est conçue pour générer le signal de sortie (6) sous la forme d'un signal de sortie d'une souris de système informatique standard et/ou d'un touchpad de système informatique standard et/ou d'un trackpad de système informatique standard.

4. Système d'équipement d'exercice physique (1) selon la revendication 1, **caractérisé en ce que** l'unité de traitement et de mappage des données (7) est conçue pour convertir le signal de capteur (4) en un certain caractère ou en une certaine chaîne de caractères d'une configuration de clavier de système informatique standard en fonction du type de capteur (3) et/ou de la puissance et/ou de la hauteur du signal de capteur (4) et/ou de la longueur du signal de capteur (4).

5. Système d'équipement d'exercice physique (1) selon l'une quelconque des revendications 1 à 4, **caractérisé en ce que** le système d'équipement d'exercice physique (1) comprend en outre au moins un élément d'entrée (9) fournissant une fonction d'un dispositif d'entrée de système informatique intégré (8) du système d'équipement d'exercice physique (1), l'unité d'entrée-sortie (5) étant conçue pour générer le signal de sortie (6) sur la base du signal de capteur (4) et/ou sur la base d'une activation dudit élément d'entrée (9).

6. Système d'équipement d'exercice physique (1) selon la revendication 5, **caractérisé en ce que** le système d'équipement d'exercice physique (1) comprend plusieurs éléments d'entrée (9) fournissant des fonctions du dispositif d'entrée de système informatique intégré (8), le dispositif d'entrée de système informatique intégré (8) étant un clavier de système informatique intégré et/ou une souris et/ou un touchpad et/ou un trackpad de système d'équipement d'exercice physique (1).

7. Système d'équipement d'exercice physique (1) selon la revendication 6, **caractérisé en ce que** les éléments d'entrée (9) fournissent toutes les fonctions d'un clavier de système informatique standard ayant une configuration QWERTY ou QWERTZ.

8. Système d'équipement d'exercice physique (1) selon l'une quelconque des revendications 1 à 7, **caractérisé en ce que** le système d'équipement d'exercice physique (1) comprend deux ou plusieurs capteurs (3) attribués au mécanisme d'entraînement (2).

9. Système d'équipement d'exercice physique (1) selon la revendication 8 en combinaison avec la revendication 6 ou 7, **caractérisé en ce que** le système d'équipement d'exercice physique (1) peut fonctionner sous un mode standard et sous un mode mappage, sous le mode standard, l'activation de l'un des éléments d'entrée (9) est suivie de l'unité d'entrée-sortie (5) générant un signal de sortie (6) sur la base de l'activation de l'élément d'entrée (9) respectif, et sous le mode mappage, l'utilisateur·trice peut attribuer une certaine possibilité d'entrée du dispositif d'entrée de système informatique standard à chacun des capteurs (3) et/ou aux signaux de capteur (4) par l'activation d'un ou plusieurs des éléments d'entrée (9).

10. Système d'équipement d'exercice physique (1) selon l'une quelconque des revendications 1 à 9, **caractérisé en ce que** le système d'équipement d'exercice physique (1) comprend une interface USB pour la connexion de l'unité d'entrée-sortie (5) à un système informatique, préférablement un PC (10).

11. Système d'équipement d'exercice physique (1) selon l'une quelconque des revendications 1 à 10, **caractérisé en ce que** le système d'équipement d'exercice physique (1) comprend une interface sans fil pour la connexion sans fil de l'unité d'entrée-sortie (5) au système informatique, en particulier par Bluetooth, Wi-Fi ou ZigBee.

12. Système d'équipement d'exercice physique (1) selon l'une quelconque des revendications 1 à 11, **caractérisé en ce que** le système d'équipement d'exercice physique (1) comprend en outre un processeur et un affichage (11) pour présenter les informations sur la base du signal de capteur (4) du au moins un capteur (3) à l'utilisateur·trice.

13. Système d'équipement d'exercice physique (1) selon l'une quelconque des revendications 1 à 12, **caractérisé en ce que** le système d'équipement d'exercice physique (1) est, ou comprend, un dispositif d'exercice physique sélectionné dans le groupe constitué d'un simulateur de course, d'un vélo d'appartement, d'un vélo elliptique, d'un rameur et d'un monte-escalier.
